**Europäisches Patentamt**

**European Patent Office**

**Office européen des brevets**

(19)

(11) **EP 1 172 147 A1**

(12) **EUROPÄISCHE PATENTANMELDUNG**

| | |
|---|---|
| (43) Veröffentlichungstag:<br>**16.01.2002 Patentblatt 2002/03** | (51) Int Cl.⁷: $B02C\ 7/10$, $B29B\ 17/00$ |

(21) Anmeldenummer: **00115344.4**

(22) Anmeldetag: **14.07.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **New Activation Technology (NAT) AG 9490 Vaduz (LI)**

(72) Erfinder:
• **Balabekov, Makhmud, Prof. Dr.**
 **Tashkent (UZ)**

• **Balabekov, Shukhrat**
 **Tashkent (UZ)**
• **Jovanovic, Djordje**
 **60598 Frankfurt (DE)**

(74) Vertreter: **Büchel, Kurt F., Dr.**
 **Büchel, Kaminski & Partner, Letzanaweg 25-27**
 **9495 Triesen (LI)**

(54) **Granulatzerkleinerung**

(57)   Ein Verfahren und eine Vorrichtung zur Zerkleinerung von Granulat, das einen sich keilförmig verengenden Raum durchläuft, wobei der Raum zwischen sich doppelkeilförmig radial nach innen bzw. aussen verjüngenden Umfangsflächen (19) von zwei in entgegengesetzter Richtung rotierenden Scheiben (2a, 2b) ausgebildet ist und eine der beiden Scheiben (2b) zusätzlich quer zu ihrer Rotationsachse schwingt. Die Umfangsflächen verfügen über eine rauhe Oberfläche. Das Verfahren und die Vorrichtung eignen sich insbesondere zum Pulverisieren von Gummigranulat.

Fig.2

EP 1 172 147 A1

**Beschreibung**

Die Erfindung bezieht sich auf Verfahren und Vorrichtungen zur Zerkleinerung von Granulat, beispielsweise Elastomeren, Kunststoffen, Mineralien, Keramik, Textilien, Getreide, insbesondere von aus Reifen erhaltenem Gummigranulat.

Es sind mechanische, thermomechanische, chemische-, Mikrowellen-, Hochtemperatur- sowie kryotechnische Verfahren zur Zerkleinerung von Gummigranulat bekannt. Als mechanische Zerkleinerer sind Walzen-, Scheiben-, Schlag-, Rotor- und Extrusionszerkleinerer bekannt, die für die Zerstörung eines komprimierten Gummigranulats geeignet sind.

Die bisher bekannten Verfahren werden mit offener Energieübertragungskette durchgeführt, die zu hohen Energieverlusten führt. In einer offenen Übertragungskette geht die Hauptmenge der von der Zerkleinerungsvorrichtung zugeführten Energie bei der Überwindung des elastischen Widerstands des Gummis vor dessen Zerkleinerung verloren. Aus diesem Grund ist der Wirkungsgrad dieser Vorrichtungen oft nicht grösser als 1%, und der Hauptanteil der aufgebrachten Energie wird durch Reibung in Wärme umgewandelt.

In der SU 1 581 381 wird beispielsweise eine Vorrichtung mit zwei spiegelsymetrisch angeordneten Kammern beschrieben. Die Kammern werden über Förderschnecken mit Zerkleinerungsmaterial beschickt. Sowohl die in die Kammern hineinreichenden, scheibenförmigen Kopfflächen der Förderschnecken als auch die dazu gegenüberliegenden Stirnflächen der Kammern sind profiliert, so dass das Zerkleinerungsmaterial zwischen den beiden genannten Flächen zermahlen wird, und in zermahlener Form über Austragevorrichtungen in den Kammerböden die Kammern wieder verlässt.

Die Nachteile dieser Vorrichtung sind hoher Material- und Energieaufwand bei relativ niedriger Ausbeute, starker Erhitzung und Zerfall des erhaltenen Pulvers, geringe Dispersion und Aktivität des Pulvers sowie nicht ausreichende Standfestigkeit der Arbeitswerkzeuge. Zudem ist die Zerkleinerung von Gummi aus Reifen mit Metallkord mit dieser Vorrichtung nicht möglich.

Es ist deshalb Aufgabe der vorliegenden Erfindung, ein Verfahren und eine Vorrichtung zur Zerkleinerung von Granulat aus verschiedenen Materialien mit verbesserter Ausbeute und erhöhter Effizienz bereitzustellen. Insbesondere sollen auch gummielastisches Material, beispielsweise metall- und textilhältiges Reifengranulat pulverisierbar sein.

Erfindungsgemäss wird die Zerkleinerung des Granulats in einem schmalen, zwischen überlappend ineinandergreifenden Doppelkeilen, ausgebildeten Spalt durchgeführt. Die Doppelkeile werden durch sich doppelkeilförmig radial nach innen bzw. aussen verjüngenden Umfangsflächen von entgegengesetzt rotierenden Scheiben ausgebildet, wobei eine Scheibe eine zentrische und die dazu entgegengesetzt rotierende Scheibe eine mit Hochfrequenz vibrierende und dadurch eine exzentrisch schwingende Drehbewegung ausführt. Durch die Vibrationsschwingungen wird das Volumen des von den Umfangsflächen der Scheiben eingeschlossenen Raums pulsierend allseitig vermindert wodurch das eingebrachte Granulat zermahlt wird.

Das in den verengenden Spalt zur Zerkleinerung eingebrachte Granulat verfängt sich im pulsierenden Spalt zwischen den entgegengesetzt rotierenden Umfangsflächen und wird sowohl dem Hochfrequenzdruck der vibrierenden Umfangsflächen der schwingenden und exzentrisch rotierenden Scheibe als auch der Schubverformung an den Umfangsflächen der zentrisch rotierenden Scheibe ausgesetzt.

In einer Ausführungsform des Verfahrens wird gummielastisches Granulat zerkleinert. Da elastisches Material zugeführte mechanische Verformungsarbeit als elastisches, inneres Potential speichert, bildet sich beim Zerkleinern eine geschlossene Wirkungskette aus dem zugeführten Hochfrequenzdruck, der Schubverformung und der dadurch als elastisches Potential gespeicherten inneren Energie, die synergistisch den Zerfall des eingebrachten gummielastischen Granulats zu Pulver herbeiführt.

Die nach Formel (1) bestimmbare Summe der vom Material aufgenommenen Kräfte ($F_A$) ist abhängig von der Drehdynamik zwischen der konstanten Energiezufuhr durch die Umfangsflächen der zentrisch rotierenden Scheibe und der pulsierenden Energiezufuhr durch die Umfangsflächen der vibrierenden, exzentrisch rotierenden Scheibe. Bei gummielastischen Granulat entspricht $\Sigma F_A$ dem elastischen Potential (d.h. der inneren Energie):

$$(1) \qquad \Sigma F_A = F_{A1} + F_{A2} = F_{b1}/tg\alpha \times tg\beta_1 \times S + F_{b2}/tg\alpha \times tg\beta_2 \times S$$

$$[N/m^2]$$

$F_{A1}$, $F_{A2}$ = vom Material aufgenommene bzw. im Material gespeicherte Kraft, die über die Umfangsflächen zugeführt wurde. [N];
$F_{b1}$, $F_{b2}$ = über die Umfangsflächen ausgeübte Kräfte [N];
$\alpha$ = Neigungswinkel der Umfangsflächen [Grad]

$\beta_1$ = Materialgreifwinkel an der Umfangsfläche der zentrisch rotierenden Scheibe [Grad]

$\beta_2$ = Frequenzträgerwinkel des Aufladens (Wirkungswinkel) durch die Vibration an der Umfangsfläche der exzentrisch rotierenden Scheibe [Grad]

S = Druckfläche am Material (d.h. Fläche der Druckwirkung)[$m^2$] (Index 1 ($F_A$, $F_B$) = zentrisch rotierende Scheibe, Index 2 ($F_A$, $F_B$) = vibrierende, exzentrisch rotierende Scheibe)

Nach Formel (2) ist die Summe der Kräfte ($F_b$) aus den externen Quellen (Umfangsflächen der Scheiben) unter der Voraussetzung, dass $F_{A1} = F_{A2} = F_n$ :

$$(2) \qquad \Sigma F_b = F_{b1} + F_{b2} = F_n \times tg\alpha \times S \times (tg\beta_1 + tg\beta_2) \qquad [N]$$

$F_n$ = Festigkeit des zu zerkleinernden Materials [$N/m^2$] oder [Pa]

Die aufzubringende spezifische Arbeit ($A_{sp}$) für ein Kilogramm des zu zerkleinernden Materials wird durch die Formel (3) berechnet:

$$(3) \qquad A_{sp} = 2 \times n \times t \times \wp / F_n \times tg\alpha \times tg\beta (tg^2\beta \times R \times n \times \cos \beta_1 + tg\beta_2 \times e \times n_1 \times tg\alpha) \qquad [Kg/J]$$

n = Drehzahl der angetriebenen zentrisch rotierenden Scheibe [U/sec.]

$n_1$ = Drehzahl der exzentrisch schwingenden Welle der vibrierenden, exzentrisch rotierenden Scheibe [U/sec.]

t = Abstand zwischen den Scheibenmittelebenen der exzentrisch und der zentrisch rotierenden Scheiben in [m]

$\wp$ = das spezifische Gewicht des zu zerkleinernden Materials in [$Kg/m^3$]

R = Radius (Nennradius) der Scheiben in [m]

e = Exzentrizität der exzentrisch rotierenden Scheibe in [m]

Die Granulatzerkleinerung wird bevorzugt in folgenden Bereichen durchgeführt: $\alpha$ = 1° - 6°; $\beta_1$ = 1° - 5°; $\beta_2$ = 30° - 1°; n = 1 - 50 U/sec.; R = 0,05 - 0,2 m; $n_1$ = 0 - 200 U/sec.; e = 0 - 5 x $10^{-3}$ m

Elastomere widersetzen sich einerseits durch hohe Widerstandsfestigkeiten ($F_n$) von etwa 10 - 30x$10^6$ Pa gegen Bruch bzw. Zerkleinerung durch Zermahlen, andererseits verfügen sie nur über eine niedrige Zerreissfestigkeit von etwa 5 - 20x$10^3$ N/m. Elastomere speichern innere Energie bis zu 300 J/$cm^3$ und setzen die innere Energie mit einer Entladungsleistung von etwa 300 kW/$cm^3$ innerhalb von $10^{-3}$ sek. wieder frei.

Das gummielastische Granulat wird im Raum zwischen den doppelkeilförmigen Umfangsflächen zweier benachbarter Scheiben von der Umfangsfläche an der zentrisch rotierenden Scheibe im Materialgreifwinkel $\beta_1$ erfasst und einer Schubverformung ausgesetzt. Zugleich wird das innere (elastische) Potential des gummielastischen Granulats im Trägerfrequenzwinkel $\beta_2$ von der vibrierenden Umfangsfläche der exzentrisch rotierenden zweiten Scheibe aufgeladen. Die durch die Energiezufuhr der beiden Scheiben akkumulierte Potentialerhöhung im Granulat wird wiederum bei der Re-Expansion des Granulats teilweise als Impuls an die vibrierende, exzentrisch rotierende Scheibe abgegeben. Dieser Impuls teilt sich einerseits in einen Drehimpuls, der die exzentrisch rotierende Scheibe in Gegendrehung zur zentrisch rotierenden Scheibe antreibt, und einen normal gerichteten Stossimpuls in Schwingrichtung der vibrierenden Scheibe. Dadurch ist eine geschlossene Übertragungskette zwischen den gegenüberliegenden Umfangsflächen zweier Scheiben und dem dazwischenliegenden Granulat hergestellt. Aufgrund der geschlossenen Übertragungskette wird die Wirkung der die doppelkeilförmige Materialzerkleinerung unter einem Winkel von 90° verstärkt. Die resultierenden Kräfte sind wesentlich höher als die Kräfte der externen Aufladung und parallel zu den Scheibenachsen gerichtet. Die geschlossene Übertragungskette zwischen den beiden Scheiben und dem zu zerkleinernden Material dämpft diese resultierenden Kräfte ohne die Lagerung und Leistung der Scheiben zu beeinflussen.

Die Winkelgeschwindigkeiten der beiden einander gegenüberliegenden Kontaktflächen eines Granulatkorns mit den beiden entgegengesetzt drehenden gegenüberliegenden Umfangsflächen sind abhängig von der Position des Granulatkorns bezüglich der beiden Scheibenachsen (d.h. den unterschiedlichen Radialabständen der Kontaktflächen an den Scheiben) um den Faktor 1,2 bis 1,6 voneinander verschieden. Die unterschiedlichen Bewegungscharakteristiken zwischen den Kontaktflächen mit der Umfangsfläche an der zentrisch rotierenden Scheibe und der vibrierenden Umfangsfläche an der exzentrisch rotierenden Scheibe des dazwischen eingeklemmten Granulatkorns führen zu einer Verschiebung (bzw. Auseinanderzerren) der Molekularschichten innerhalb des Granulatkorns, wobei die entstehende Schubspannung gegebenenfalls die intermolekularen Kräfte zwischen den Elastomerschichten bzw. -fasern überwindet.

Ausserdem bilden sich bereits bei niedrigen Belastungsfrequenzen ab ca. 20 Hz bei zugleich hohem Druck durch die Schubspannung und dem entgegengesetzten Verschieben der Molekularschichten im gummielastischen Granulat Kavitationsstörungen, die zur Erosion und Materialzerstörung beim Zusammenfallen der Kavitationsblasen nach Überschreiten der Zerreissbeanspruchung führen. Denn die Kavitationsstörungen konzentrieren die innere Spannung im Material und leiten aufgrund der niedrigen Zerreissfestigkeit des Elastomers und des hohen gespeicherten elastischen Potentials den Körperzerfall unter Freisetzung eines Teils dieser gespeicherten inneren Energie zur Erzeugung der neuen Oberflächen des Pulvers ein.

Die auf die Partikel wirkende Reibungskraft und damit einhergehenden Leistungsverluste können durch externe Mittel zur Spannungsverdichtung auf den Keilflächen auf ein Minimum herabgesetzt werden, womit man eine all zu grosse Erwärmung des zu zerkleinernden Materials unterbindet. Mit externen Mittel zur Spannungsverdichtung sind auch die starken inneren Spannungskonzentrationen im elastischen Material erzeugbar. Als Mittel zur Spannungsverdichtung eignet sich insbesondere die Körnung einer rauher Oberfläche an den Keiloberflächen der Scheiben.

Da dadurch kaum Reibungsprozesse zwischen dem zu zerkleinernden Material und den Scheibenoberflächen stattfinden, ist die Verfahrenseffizienz erheblich gesteigert. Messungen zeigten, dass die zugeführte Energie nahezu der Steigerung des elastischen Potentials entspricht. Der Grossteil der zugeführten Energie wird somit direkt in Zerkleinerungsarbeit der Masse umgesetzt.

Um eine hohe Standfestigkeit bei geringen Verschleiss zu gewährleisten, sind zumindest die Keilflächen bevorzugt mit einer äusserst harten, beispielsweise um die $5x10^{10}$ kg/mm$^2$ gehärtete, und hitzefesten, beispielsweise bis 1500°C standhaltenden, rauhen Oberfläche ausgestattet.

Reifengranulat ist mitsamt Metall- und Textilkorden zu Pulver zerkleinerbar. Die Metall- und Textilteilchen können anschliessend nach bekannten Verfahren, beispielsweise Windsichten, Magnet- bzw. Elektroscheidung, etc., aufgrund der unterschiedlichen Materialeigenschaften leicht abgeschieden und sortiert werden.

Vorteile des erfindungsgemässen Verfahrens sind, dass die Feinheit und die Aktivität des erhaltenen Pulvers hoch (d.h. erneut vulkanisierbar) und der Lärmpegel bei der Zerkleinerung reduziert ist. Zudem ist eine spezifische Zerkleinerung des Gummigranulats samt Begleitstoffen, wie beispielsweise Metall- und Textilkorden im Granulat aus Reifen, bei zugleich verbesserter Standfestigkeit der Arbeitsmittel möglich.

Eine erfindungsgemässe Vorrichtung zur Zerkleinerung besteht aus zwei Blöcken von jeweils auf einer Welle hintereinandergereihten Scheiben, die sich doppelkeilförmig radial nach aussen bzw. nach innen verjüngen, wobei die beiden Blöcke auf zueinander parallelen Wellen angeordnet sind und über die Doppelkeile ihrer Scheiben verzahnt ineinander greifen. Die Doppelkeile können entweder durch spitz zulaufende Stirnseiten oder durch komplementäre Einkerbungen in der Scheibe ausgebildet werden.

Bevorzugt wird lediglich einer der Scheibenblöcke mit einem Motor angetrieben, während man den Zweiten passiv treiben lässt. Gegebenenfalls können beide Scheibenblöcke in Rotation versetzt werden

Die passiv getriebenen Scheiben werden als die vibrierenden, exzentrisch schwingenden Scheiben ausgeführt und beim Durchlauf des zu zerkleinernden Materials in Gegenrotation zu den motorisch angetriebenen Scheiben versetzt, wobei die Vibrationsschwingungen von einem externen Antrieb erzeugt werden. Die Schwingung erfolgt bevorzugt in der von den beiden Rotationsachsen der zentrisch rotierenden und der vibrierenden exzentrisch, treibenden Scheiben gebildeten Ebene. Die Welle der exzentrisch schwingenden Scheiben kann man, beispielsweise, exzentrisch lagern und in einer weiteren Ausführungsform eine Schwungmasse an ihr anbringen, über die eine Hochfrequenz-Schwingbewegung mit hohem spezifischen Druck im Zerkleinerungsraum zwischen den Scheiben bei einem relativ geringen Arbeitsaufwand der exzentrisch schwingenden Welle erzeugbar ist. Selbstverständlich kann die Lagerführung auch zentrisch erfolgen und die Welle anstelle mit einer Schwungmasse zwischen den Lagern exzentrisch ausgeformt sein.

Die Erfindung umfasst ausserdem eine Vorrichtung, bestehend aus einem Gehäuse mit den Scheibenblöcken, die auf zwei zueinander parallel gelagerten Wellen angebracht sind; einer Einlauf- und Auslaufvorrichtung und einem Antrieb für zumindest eine der beiden Wellen.

Die erfindungsgemässe Vorrichtung erlaubt den Material- und Energieaufwand zu reduzieren, die Verschleissfestigkeit der Zerkleinerungsorgane und die Ausbeute aus dem Verfahren zu steigern sowie den Lärm und die Luftverunreinigung zu senken.

Eine Ausführungsform der Erfindung wird beispielhaft anhand von Zeichnungen erläutert. Es zeigen:

Fig. 1   ein kinematisches Schema der Zerkleinerungsvorrichtung,

Fig. 2   eine Aufsicht auf die Zerkleinerungsvorrichtung aus Fig. 1,

Fig. 3   eine Draufsicht auf eine Scheibe und

Fig. 4   die Scheibe aus Figur 3 im Querschnitt.

Die Vorrichtung besteht aus einem Gehäuse 1 in dem eine Antriebswelle 3 und eine Exzenterwelle 5 parallel zueinander angeordnet sind. Auf der Antriebswelle 3 ist ein Block aus hintereinander angeordneten Scheiben 2a fest angebracht. Beispielsweise können 20 Scheiben oder mehr auf diese Weise angeordnet werden. Zumindest sind 2 Scheiben, vorzugsweise wenigstens 5, insbesondere 10 Scheiben anzuordnen. Die Exzenterwelle 5 ist beidseitig in Exzenterbüchsen 6 gelagert. An der Exzenterwelle 5 ist eine exzentrisch, zwischen den Exzenterbüchsen 6, angeordnete Schwungmasse 8 vorgesehen. Auf der Exzenterwelle 5 ist eine die Schwungmasse 8 ummantelnde, mit der Exzenterwelle 5 nicht starr verbundene, Rohrwelle 7 aufgesetzt, an der ein Block aus nebeneinander angeordneten Scheiben 2b angebracht ist. Über zwischen der Exzenterwelle 5 und Antriebswelle beidseitig angeordneten Exzenterkörper 4 steht die Exzenterwelle 5 in den Exzenterbüchsen 6 mit dem Gehäuse 1 in Kontakt. Selbstverständlich können die Exzenterkörper auch an der zur Antriebswelle abgewandten Seite der Exzenterbüchsen 6 angeordnet sein. Zum Einstellen der Exzentrizität zwischen den Scheibenblöcken der Antriebswelle 3 und der Exzenterwelle 5 sind die Exzenterkörper 4 mit einem Hebel 9 verdrehbar. Die Exzentrizität der Exzenterwelle 5 wird bevorzugt in einem Bereich von 0 bis 3 mm, abhängig von dem zu zerkleinernden Material eingestellt.

Die Scheiben 2a und 2b sind an den Umfangsflächen 19 jeweils sich radial doppelkeiförmig verjüngend ausgebildet. Die Scheibenblöcke der Antriebswelle 3 und der Exzenterwelle 5 greifen über die Umfangsflächen 19 der Scheiben 2a, 2b miteinander überlappend verzahnt so ineinander, dass jeweils zwischen zwei überlappenden, gegenüberliegenden Umfangsflächen einander benachbarter Scheiben 2a und 2b, ein sich keilförmig verengender Zerkleinerungsraum ausgebildet ist.

Die Antriebswelle 3 ist vom Motor 13 über einen Keilriemenantrieb 10, ein Getriebe 12 und eine Kupplung 11 antreibbar, wobei das Getriebe 12 die Motorumdrehungen reduziert, beispielsweise um das 20 bis 60fache. Die Exzenterwelle 5 ist direkt über einen Keilriemenantrieb, beispielsweise mit einer drehzahlerhöhenten Übersetzung von 1:3, vom Motor 13 in Schwingung versetzbar.

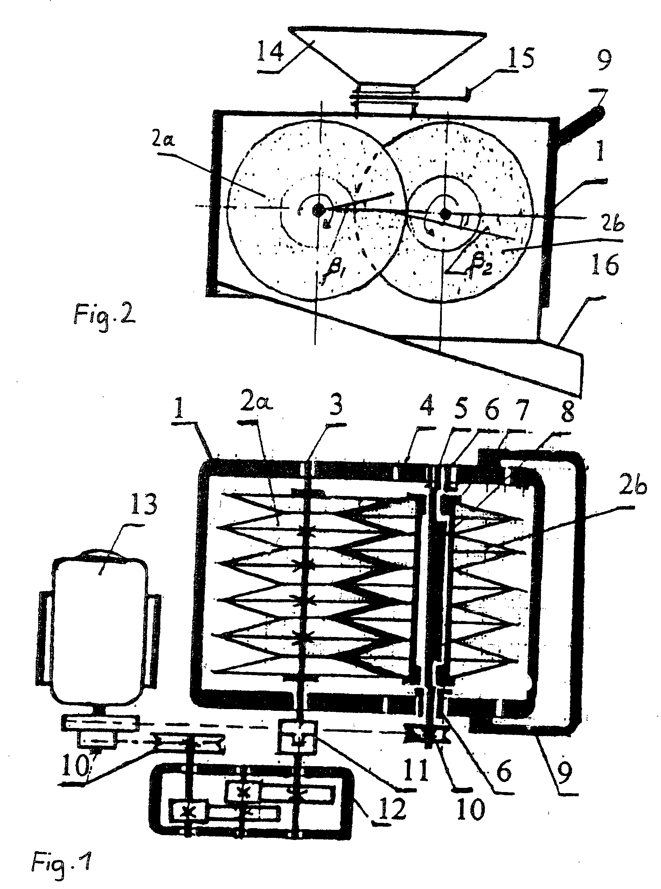

In Fig. 2 ist oberhalb der beiden Scheiben 2a, 2b ein Einfülltrichter 14 für die Materialzufuhr mit einem Einlassschieber 15 am Gehäuse 1 und unterhalb der Scheiben 2a, 2b ein schräg nach unten laufender Austrittsstutzen 16 am Boden des Gehäuses 1 für das dispergierte Material dargestellt. Der Materialgreifwinkel $\beta_1$ ist an einer Umfangsfläche der Scheibe 2a und der Trägerfrequenzwinkel des Aufladens $\beta_2$ ist an einer Umfangsfläche der Scheibe 2b schematisch skizziert.

Bei Betrieb werden nach Starten des Motors 13 die Antriebswelle 3 mit den Scheiben 2a in Rotation und gleichzeitig die Exzenterwelle 5 samt den Scheiben 2b in Schwingung versetzt. Durch Öffnung des Schiebers 15 fliesst Granulatmaterial aus dem Einfülltrichter 14 in die zwischen den Scheiben 2a und 2b ausgebildeten Zerkleinerungsräume. Beim Durchlauf des Granulats erhalten die Scheiben 3b vom Granulat einen zusätzlichen Schwingimpuls sowie einen Drehimpuls in Gegenrichtung zur Rotationsrichtung der Antriebswelle 3, der die Scheiben 2b in Gegenrichtung zu den Scheiben 2a an der Antriebswelle 3 in Drehung versetzt. Das zerkleinerte Material wird anschliessend aus dem Gehäuse 1 durch den Austrittsstutzen 16 am Boden ausgetragen.

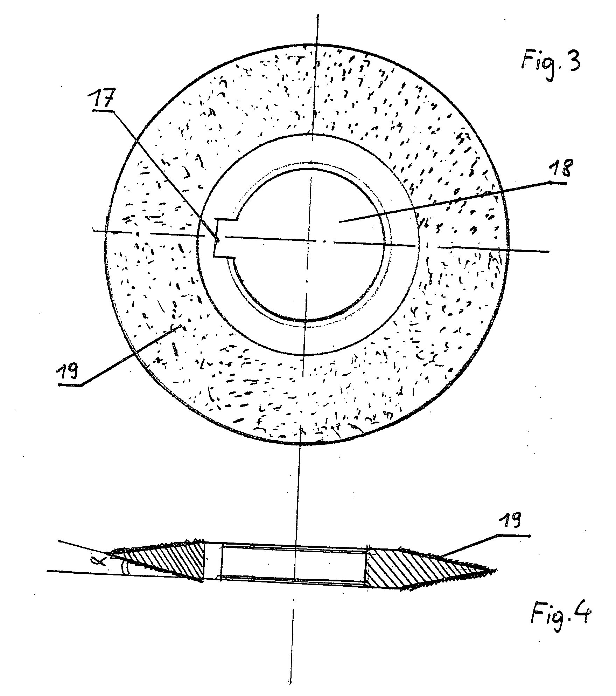

In Fig. 3 ist eine einzelne Scheibe dargestellt, die mit einer Nut 17 in einer zentrischen Bohrung 18 entweder auf der Antriebswelle 3 oder auf der Rohrwelle 7 starr befestigbar ist. Die rauhen Umfangsflächen 19 weisen den gleichen Neigungswinkel $\alpha$ (Fig. 4) auf.

Wird, beispielsweise, der Neigungswinkel $\alpha$ der Umfangsflächen 19 von 5° - 6°, der Drehphasenwinkel $\beta_1$ an den Scheiben 2a der Antriebswelle 3 von 5° - 10° und der maximale Wirkungswinkel $\beta_2$ der Exzentrizität der exzentrisch drehenden Scheiben 2b mit 1° gewählt und beträgt der Scheibenradius R 0.2m, kann Gummigranulat aus Altreifen mit der in den Zeichnungen dargestellten Ausführungsform zu Pulver mit einer Feinheit von bis zu 20μm bei einer Ausbeute von 1 T/h verarbeitet werden. Das erhaltene Pulver ist aktiv (d.h erneut vulkanisierbar) und zerfällt nicht. Der Energieaufwand beträgt dabei etwa 20 W/kg und die Erwärmung bei der Zerkleinerung ist lediglich zwischen 10 und 30°C. Selbstverständlich können mit der beschriebenen Vorrichtung verschiedenste Materialien, wie beispielsweise Mineralien, Kunststoffe, Chemikalien, Keramik, Textil, Getreide, usw., zermahlen werden.

Das Verfahren ist ausserdem nicht nur umweltfreundlich, sondern die beschriebene Vorrichtung entwickelt im Betrieb auch äusserst wenig Lärm.

**Patentansprüche**

1. Verfahren zur Zerkleinerung von Granulat, das einen sich keilförmig verengenden Raum durchläuft, **dadurch gekennzeichnet dass** der Raum zwischen sich doppelkeilförmig radial nach innen bzw. aussen verjüngenden Umfangsflächen (19) von zwei in entgegengesetzter Richtung rotierenden Scheiben (2a, 2b) ausgebildet ist, wobei wenigstens eine der beiden Scheiben (2b) zusätzlich quer zu ihrer Rotationsachse schwingt.

2. Verfahren nach Anspruch 1, **dadurch gekennzeichnet, dass** die Umfangsflächen (19) zumindest teilweise über eine rauhe Oberfläche verfügen.

**3.** Verfahren nach einem der Ansprüche 1 oder 2, **dadurch gekennzeichnet, dass** die Umfangsflächen (19) einen Neigungswinkel ($\alpha$) von 1° bis 5° aufweisen.

**4.** Verfahren nach einem der vorangegangenen Ansprüche, **dadurch gekennzeichnet, dass** die wenigstens eine schwingende Scheibe (2b) mit einer Amplitude von bis zu $5 \times 10^{-3}$m und einer Frequenz von bis zu 200 Hz schwingt.

**5.** Verfahren nach einem der vorangegangenen Ansprüche, **dadurch gekennzeichnet, dass** - vorzugsweise- die gegebenenfalls nicht schwingende Scheibe (2b) mit einer Drehzahl von 1 bis 50 U/sec angetrieben wird.

**6.** Vorrichtung zur Zerkleinerung von Granulat, bestehend aus auf wenigstens zwei parallel zueinander liegenden Wellen (3, 5)angeordneten, rotierbaren Scheiben (2a, 2b), die mit ihren zwischen sich doppelkeilförmig radial nach innen bzw. aussen verjüngenden Umfangsflächen (19) ineinandergeifen.

**7.** Vorrichtung nach Anspruch 6, **dadurch gekennzeichnet, dass** an jeder Welle (3, 5) zumindest 2, vorzugsweise wenigstens 5, insbesondere 10, Scheiben (2a, 2b) hintereinander zu Scheibenblöcken angeordnet sind

**8.** Vorrichtung nach einem der Ansprüche 6 oder 7, **dadurch gekennzeichnet, dass** eine Welle (5), gegebenenfalls verstellbar, exzentrisch gelagert ist.

**9.** Vorrichtung nach Anspruch 8, **dadurch gekennzeichnet, dass** die Scheiben (2b) auf einem, die exzentrisch gelagerte und/oder exzentrisch ausgeformte Welle (5) lose ummantelnden, Rohr (7) fest montiert sind, wobei gegebenenfalls an der Welle ein Schwungmasse (8) angebracht ist.

**10.** Vorrichtung nach einem der Ansprüche 6 bis 9, **dadurch gekennzeichnet, dass** die Umfangsflächen (19) der Scheiben (2a, 2b) mit einer zumindest teilweise, bevorzugt gehärteten, rauhen Oberfläche ausgestattet sind, wobei, gegebenenfalls, die Härte bis zu etwa $5 \times 10^{10}$ Pa beträgt.

Fig. 2

Fig. 1

Fig. 3

17

18

19

Fig. 4

19

Europäisches
Patentamt

## EUROPÄISCHER RECHERCHENBERICHT

Nummer der Anmeldung

EP 00 11 5344

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | DE 196 12 159 A (GAIL JOSEF) 2. Oktober 1997 (1997-10-02) * Spalte 4, Zeile 45 - Spalte 6, Zeile 35 * * Abbildungen 1-4 * --- | 1,6 | B02C7/10 B29B17/00 |
| A | US 1 368 636 A (KREUTZBERG, O.A.) 15. Februar 1921 (1921-02-15) * Seite 1, Zeile 32 - Zeile 57 * * Abbildung 1 * --- | 1,6 | |
| A | DE 40 39 744 A (THAELMANN SCHWERMASCHBAU VEB) 11. Juni 1992 (1992-06-11) * Abbildung A * * Abbildungen 1,2 * ----- | 1 | |

| | RECHERCHIERTE SACHGEBIETE (Int.Cl.7) |
|---|---|
| | B02C B29B B29H |

Der vorliegende Recherchenbericht wurde für alle Patentansprüche erstellt

| Recherchenort | Abschlußdatum der Recherche | Prüfer |
|---|---|---|
| DEN HAAG | 14. Dezember 2000 | Wennborg, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 00 11 5344

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-12-2000

| Im Recherchenbericht angeführtes Patentdokument | Datum der Veröffentlichung | Mitglied(er) der Patentfamilie | Datum der Veröffentlichung |
|---|---|---|---|
| DE 19612159 A | 02-10-1997 | KEINE | |
| US 1368636 A | 15-02-1921 | KEINE | |
| DE 4039744 A | 11-06-1992 | KEINE | |

EPO FORM P0461

Für nähere Einzelheiten zu diesem Anhang : siehe Amtsblatt des Europäischen Patentamts, Nr.12/82